# EUROPÄISCHE PATENTSCHRIFT

(11) **EP 2 730 173 B1**
(45) Veröffentlichungstag und Bekanntmachung des Hinweises auf die Patenterteilung: **25.03.2020**
(21) Anmeldenummer: 13191814.6
(22) Anmeldetag: 06.11.2013
(51) Int. Cl.: A23G 3/02, A23G 3/34

(54) **Gieß-Band**
Cast strip
Bande de coulée

(30) Priorität: 08.11.2012 DE 102012220328
(43) Veröffentlichungstag der Anmeldung: 14.05.2014
(73) Patentinhaber: Mederer GmbH, 90763 Fürth (DE)
(72) Erfinder: Mederer, Herbert, 90768 Fürth (DE)
(74) Vertreter: Rau, Schneck & Hübner Patentanwälte Rechtsanwälte PartGmbB

(56) Entgegenhaltungen:
- WO-A1-02/056713
- WO-A2-2010/072847
- CH-A- 109 472
- DE-B4- 10 152 289
- DE-C1- 19 652 080
- GB-A- 921 456
- GB-A- 2 254 036

## Beschreibung

Die Erfindung betrifft eine Gieß-Anlage zur Herstellung von Fruchtgummi-Artikeln mit mindestens einem Gieß-Band. Die Erfindung betrifft außerdem ein Verfahren zur Herstellung von Fruchtgummi-Artikeln mit mindestens einem Gieß-Band.

Fruchtgummi-Artikel sind durch offenkundige Vorbenutzung bekannt. Diese enthalten im Allgemeinen Glukosesirup, Zucker, Gelatine und andere Geliermittel. Ferner enthalten diese in der Regel färbende Lösungen, Aromen und Säuerungsmittel. Zur Herstellung der Fruchtgummi-Artikel wird bekanntlich eine, die obigen Bestandteile enthaltende, spezielle GießMasse in Formpuder eingegossen und dann weiterbehandelt. Die Herstellung derartiger Fruchtgummi-Artikel ist aufwendig.

Aus der DE 196 52 080 C1 sind ein Verfahren zur Herstellung von Fruchtgummi-Bonbonwaren in langgestreckter Form und eine Vorrichtung zur Durchführung eines solchen Verfahrens bekannt. Zur Herstellung der Fruchtgummi-Bonbonwaren ist eine Endlos-Rillenform vorgesehen, die unter Gießöffnungen einer Bonbongießanlage bewegt wird und auf oder in einem Förderband angeordnet ist. In der Form erfolgt bereits eine Verfestigung der Fruchtgummi-Bonbonmasse. Die ausgeformten Fruchtgummi-Bonbonwaren können anschließend noch durch eine Durchtrocknungsstation geführt werden. Um den Trocknungsvorgang der Fruchtgummi-Bonbonmasse innerhalb der Formrillen zu beschleunigen, kann beispielsweise eine Kühlung des Förderbands bzw. Zuführung von Luft zur Oberflächentrocknung erfolgen.

Aus der GB 2 254 036 A ist eine Vorrichtung zum kontinuierlichen Gießen von Lebensmitteln bekannt. Die Lebensmittel sind schnell erstarrend und können beispielsweise auf Zucker basierende Zusammensetzungen sein. Die Vorrichtung umfasst eine flexible Gießform, die an einer Gießstation vorbeigeführt wird und nach oben offene Vertiefungen hat. Die Form ist vorzugsweise als endloses Band eines Fördersystems ausgeführt und kann durch eine oder mehrere Kühlbereiche, wie Kühlluft-Tunnels, laufen.

Eine aus der CH 109 472 B bekannte Einrichtung zur Herstellung von Konfitüren aus Zucker- oder Fruchtsaftmasse setzt offene Formen ein, in die Konfitüren abgefüllt werden. Die flüssige Masse wird über sich fortbewegende, dicht aneinander liegende Formenplatten gegossen. Die Masse gelangt dann in Höhlungen oder Formen der Formenplatten. Eine Trockenvorrichtung umfasst verschiedene Lagen übereinander angeordneter Förderbänder. Bei dieser Trockenvorrichtung fällt das Trockengut, wenn es an dem einen Ende eines Förderbands angekommen ist, auf das nächst untere herab.

Die WO 02/056713 A1 offenbart eine Vorrichtung zum Bilden geformter Produkte, bei welchen eine Gelierflüssigkeit in Formen geliert. Günstigerweise umfasst die Gelierflüssigkeit Nahrungsmittelmaterial. Das Nahrungsmittelmaterial kann beispielsweise Fruchtpüree sein.

Aus der DE 101 52 289 B4 ist ein Verfahren zum Herstellen eines verzehrbaren Formkörpers aus gekochter Zuckermasse bekannt, die beispielsweise eine Fruchtmasse sein kann. Die Zuckermasse wird in fließfähigem Zustand in zumindest bereichsweise aus elastischem Material bestehende Formen gegossen. Die eingesetzten Formen sind an einem endlosen Transportband angeordnet. Im Bereich eines oberen Turms ist eine Gießstation zum Eingießen einer Portion gekochter Zuckermasse in die Formen vorgesehen. Nach dem Eingießen kann eine Kühlung in einem Kühltunnel oder dergleichen erfolgen.

Die GB 921 456 offenbart eine Vorrichtung zum Abgeben einer Vielzahl kleiner Mengen von Konfitüre, Gelee oder dergleichen.

Der Erfindung liegt daher die Aufgabe zugrunde eine Gieß-Anlage zu schaffen, mit der auf einfache Art und Weise Fruchtgummi-Artikel herstellbar sind. Eine kostengünstige Massenfertigung soll ebenfalls möglich sein. Ferner soll ein Verfahren geliefert werden, das eine einfache Herstellung entsprechender Fruchtgummi-Artikel erlaubt. Mit dem Verfahren soll auch eine kostengünstige Massenfertigung entsprechender Fruchtgummi-Artikel möglich sein.

Diese Aufgabe wird erfindungsgemäß durch die in den unabhängigen Ansprüchen 1 und 12 angegebenen Merkmale gelöst. Der Kern der Erfindung liegt darin, ein Gieß-Band mit mindestens einer Vertiefung vorzusehen, in die gießfähige Fruchtgummi-Masse zur Herstellung von mindestens einem Fruchtgummi-Artikel einbringbar ist. Die Fruchtgummi-Masse enthält mindestens ein Geliermittel, das zu einer, vorzugsweise besonders schnellen, Gelierung führt und einen geleeartigen bzw. gallertartigen Fruchtgummi-Artikel bildet. Vorzugsweise ist das Geliermittel Pektin. Das Einbringen erfolgt vorzugsweise durch Gießen bzw. Spritzgießen. Die Fruchtgummi-Artikel werden also durch ein Urformverfahren bzw. Urformen hergestellt. Aus der Fruchtgummi-Masse entsteht nach dem Erstarren bzw. Abkühlen ein handhabbarer, körperlicher Fruchtgummi-Artikel. Die Form der Fruchtgummi-Artikel ist durch die Form der mindestens einen Vertiefung bestimmt.

Die gießfähige Fruchtgummi-Masse weist eine dynamische Viskosität auf, die zwischen 500 mPa·s und 6.000 mPa·s, bevorzugter zwischen 1.000 mPa·s und 4.000 mPa·s, liegt. Die gießfähige Fruchtgummi-Masse hat dann eine Dichte, die in etwa zwischen 0,7 kg/dm³ und 1,7 kg/dm³ liegt.

Das Abkühlen bzw. Erstarren der Fruchtgummi-Artikel erfolgt in einer Kühl-Vorrichtung, wie einem Kühl-Kanal, bzw. einem Kühl-Raum. Es ist von Vorteil, wenn ein Kühlen durch mindestens einen Kühl-Gasstrom, bevorzugter Kühl-Luftstrom, erfolgt.

Das Trocknen der Fruchtgummi-Artikel erfolgt in einer Trocknungs-Vorrichtung, wie einem Trocknungs-Kanal, bzw. einem Trocknungs-Raum. Es ist von Vorteil, wenn ein Trocknen durch mindestens einen Trocknungs-Gasstrom bzw. trockenen Gasstrom, bevorzugter einen Trocknungs-Luftstrom bzw. trockenen Luftstrom, erfolgt.

Die mindestens eine Fruchtgummi-Masse wird gekühlt und getrocknet. Das Kühlen und Trocknen kann in separaten Vorrichtungen, wie Kanälen, bzw. Räumen oder in einer gemeinsamen Vorrichtung, wie einem Kühl- und Trocknungs-Kanal, bzw. einem gemeinsamen Raum erfolgen. Es ist von Vorteil, wenn die Kühl-Vorrichtung und die Trocknungs-Vorrichtung in einem gemeinsamen Gehäuse untergebracht sind. Vorzugsweise sind die Kühl-Vorrichtung und die Trocknungs-Vorrichtung durch mindestens ein Trenn-Element, bevorzugter eine Trenn-Platte bzw. eine Trenn-Decke, voneinander getrennt. Der Kühl-Gasstrom und der Trocknungs-Gasstrom sind so voneinander getrennt, so dass eine Vermengung bzw. Vermischung zwischen diesen einfach und funktionssicher verhinderbar ist. Das mindestens eine Trenn-Element bildet somit auch ein Führungs-Element zum Führen des Kühl-Gasstroms und/oder des Trocknungs-Gasstroms.

Es ist von Vorteil, wenn der Fruchtgummi-Artikel eine Breitenabmessung aufweist, die zwischen 2 mm und 10 mm, bevorzugter zwischen 3 mm und 7 mm, liegt. Vorzugsweise hat Fruchtgummi-Artikel eine Höhe, die zwischen 0,5 mm und 7 mm, bevorzugter zwischen 1 mm und 3 mm, liegt. Vorzugsweise ist das Gieß-Band zumindest im Bereich der mindestens einen Vertiefung antihaftend.

Erfindungsgemäß wird die die mindestens eine Vertiefung begrenzende Wand mit einem Trennmittel bzw. Antihaftmittel, vorzugsweise einem Trennöl, vor dem Eingießen der gießfähigen Fruchtgummi-Masse benetzt.

Es ist von Vorteil, wenn stromaufwärts zu der Gieß-Anlage die Fruchtgummi-Masse dosiert und gemischt wird. Vorzugsweise sind verschiedene Vorrats-Behälter zur Bevorratung der verschiedenen Bestandteile der Fruchtgummi-Masse vorgesehen.

Weitere vorteilhafte Ausgestaltungen der Erfindung sind in den Unteransprüchen angegeben.

Durch das Übereinanderanordnen der Kühl-Vorrichtung und der Trocknungs-Vorrichtung gemäß Anspruch 2 nehmen diese beiden zusammen nur eine äußerst kleine Grundfläche ein, was platzsparend ist. Analoges gilt zu der etagenartigen Anordnung der Transport-Bänder.

Alternativ sind die Kühl-Vorrichtung und die Trocknungs-Vorrichtung in der Förder-Richtung der Fruchtgummi-Masse bzw. -Artikel nebeneinander angeordnet. Dies erlaubt eine äußerst einfache und komplikationsfreie Herstellung der Fruchtgummi-Artikel.

Der mindestens eine Einfüll-Körper nach Anspruch 5 ermöglicht ein gezieltes Einbringen der gießfähigen Fruchtgummi-Masse in die mindestens eine Vertiefung.

Durch die Ausgestaltung nach Anspruch 6 ist das Gieß-Band gut im Lebensmittelbereich einsetzbar. Ein Anhaften der Fruchtgummi-Artikel ist äußerst wirksam verhinderbar. Ferner zeichnet sich ein derartiges Gieß-Band dadurch aus, dass dieses besonders leicht reinigbar und äußerst temperaturbeständig ist.

Das Gieß-Band nach Anspruch 8 läuft vorzugsweise auf dem mindestens einen Lauf-Bereich. Vorzugsweise ist der mindestens eine Lauf-Bereich äußerst gleitfähig. Es ist von Vorteil, wenn der mindestens eine Lauf-Bereich auf mindestens einem Lauf-Körper, wie einer Rolle oder einem ebenen Untergrund, läuft. Die Rolle ist beispielsweise eine Trag-Rolle, Antriebs-Rolle oder eine Umlenk-Rolle. Das Gewebe-Material des mindestens einen Lauf-Bereichs ist vorzugsweise ein Textil-/Kunststoff-Gewebe.

Es ist zweckmäßig, wenn das Gieß-Band als Mehrlagen-Körper ausgeführt ist und mindestens zwei verschiedene Lagen umfasst. Es ist von Vorteil, wenn der Formgebungs-Bereich durch eine separate Material-Lage gebildet ist. Vorzugsweise ist auch der Lauf-Bereich durch eine separate, andere Material-Lage gebildet, die sich in ihrer Beschaffenheit von der Beschaffenheit der Material-Lage des Formgebungs-Bereichs unterscheidet. Gemäß einer alternativen Ausführungsform sind der Formgebungs-Bereich und der Lauf-Bereich durch eine einzige Material-Lage gebildet.

Das Gieß-Band nach Anspruch 9 ist äußerst einfach und funktionssicher antreibbar. Vorzugsweise erstreckt sich das mindestens eine Antriebs-Element in der Längs-Richtung des Gieß-Bands. Es ist von Vorteil, wenn das mindestens eine Antriebs-Element von dem Gieß-Band vorstehende Antriebs-Zähne aufweist, die mit mindestens einem, vorzugsweise rotierenden, Antrieb in Zahn-Verbindung stehen.

Die Ausgestaltung nach Anspruch 10 erlaubt eine äußerst einfache und wirtschaftliche Massenfertigung der Fruchtgummi-Artikel. Es ist von Vorteil, wenn durch die mindestens eine Vertiefung strangartige, nudelartige oder spaghettiartige Fruchtgummi-Artikel herstellbar sind.

Es ist von Vorteil, wenn die mindestens eine Vertiefung nutartig ist und vorzugsweise einen konstanten Querschnitt aufweist. Die mindestens eine Vertiefung ist so äußerst einfach herstellbar. Ferner ermöglicht dies eine besonders einfache und wirtschaftliche Fertigung von Fruchtgummi-Artikeln. Der Querschnitt der mindestens einen Vertiefung ist vorzugsweise eckig, bevorzugter rechteckig oder trapezförmig, teilkreisförmig oder dergleichen. Kombinationen sind möglich. Alternativ ändert sich der Querschnitt der mindestens einen Vertiefung über deren Verlauf, insbesondere in der Höhe und/oder Breite.

Es ist zweckmäßig, wenn mehrere der Vertiefungen vorgesehen sind, wobei die Vertiefungen vorzugsweise parallel zueinander und nebeneinander verlaufen. Diese Ausgestaltung ermöglicht wieder eine äußerst wirtschaftliche Massenfertigung von Fruchtgummi-Artikeln. Günstigerweise sind zwischen 2 und 500, bevorzugter zwischen 20 und 100 Vertiefungen, vorgesehen. Der Abstand der Vertiefungen in der Breiten-Richtung zueinander liegt vorzugsweise zwischen 2 mm und 7 mm, bevorzugter zwischen 3 mm und 5 mm.

Gemäß Anspruch 11 ist das Gieß-Band flexibel und endlos. Durch die endlose Ausgestaltung ist es besonders gut und wirtschaftlich in der Massenfertigung von Fruchtgummi-Artikeln einsetzbar. Die flexible Ausgestaltung erlaubt eine gute Führung und Umlenkung des Gieß-Bands.

Es ist von Vorteil, wenn das Gieß-Band in der Breiten-Richtung eine Breite aufweist, die zwischen 150 mm und 5.000 mm, bevorzugter zwischen 250 mm und 800 mm, liegt.

Es ist von Vorteil, wenn das Gieß-Band in gestreckter Form eine Länge zwischen 5 m und 70 m, bevorzugter zwischen 30 m und 40 m, hat. Die Länge bzw. Geschwindigkeit des Gieß-Bands ist derart gewählt, dass die in die mindestens eine Vertiefung eingebrachte Fruchtgummi-Masse in der Lage ist, dort mindestens teilweise zu gelieren.

Es ist von Vorteil, wenn die Fruchtgummi-Artikel in mindestens einer Querschneide-Einrichtung abgeschnitten werden, wobei vorzugsweise die mindestens eine Querschneide-Einrichtung eine berührungslos schneidende Querschneide-Einrichtung ist. Die mindestens eine Querschneide-Einrichtung erlaubt eine Kürzung der Fruchtgummi-Artikel. Endlose Fruchtgummi-Artikel können so vorzugsweise in handhabbare Längen geschnitten werden. Es ist von Vorteil, wenn die berührungslos schneidende Querschneide-Einrichtung eine Ultraschall- oder Laser-Querschneide-einrichtung ist. Alternativ umfasst die mindestens eine Querschneide-Einrichtung mindestens ein Schnitt-Messer bzw. eine Schnitt-Klinge, um handhabbare Längen der Fruchtgummi-Artikel bzw. die gewünschten Produkt-Längen der Fruchtgummi-Artikel zu erzeugen. Das mindestens eine Schnitt-Messer bzw. die mindestens eine Schnitt-Klinge ist günstigerweise manuell, mechanisch, bevorzugter elektromechanisch, pneumatisch oder dergleichen betätigbar bzw. antreibbar.

Es ist von Vorteil, wenn die vollständige Gelierung und/oder vollständige Trocknung in den Verpackungsbeuteln erfolgt, in welchen die Fruchtgummi-Artikel verpackt sind/werden. Die vollständige Gelierung und/oder vollständige Trocknung dauert dann im Allgemeinen zwischen 15 Stunden und 60 Stunden, bevorzugter zwischen 20 Stunden und 50 Stunden. Dies geht besonders gut, wenn die Fruchtgummi-Artikel nur eine geringe Dicke aufweisen.

Nachfolgend werden unter Bezugnahme auf die beigefügte Zeichnung bevorzugte Ausführungsformen der Erfindung beschrieben. Dabei zeigen:
- Fig. 1a: eine schematische Ansicht einer Misch- und Dosier-Vorrichtung, die stromaufwärts zu der erfindungsgemäßen Gieß-Anlage angeordnet ist,
- Fig. 1b: eine schematische Ansicht einer erfindungsgemäßen Gieß-Anlage, die ein Gieß-Band umfasst,

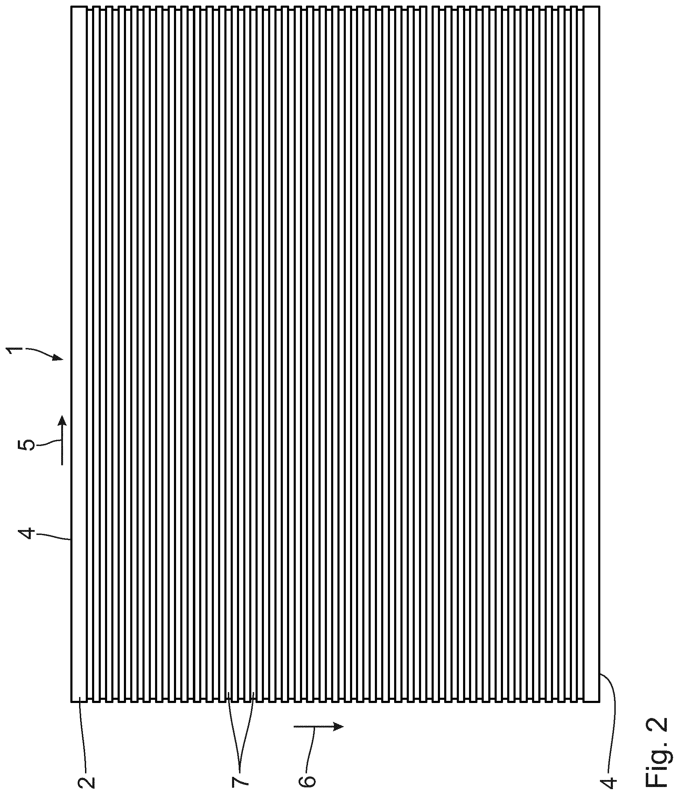

- Fig. 2: eine Draufsicht auf das in Fig. 1 gezeigte Gieß-Band,

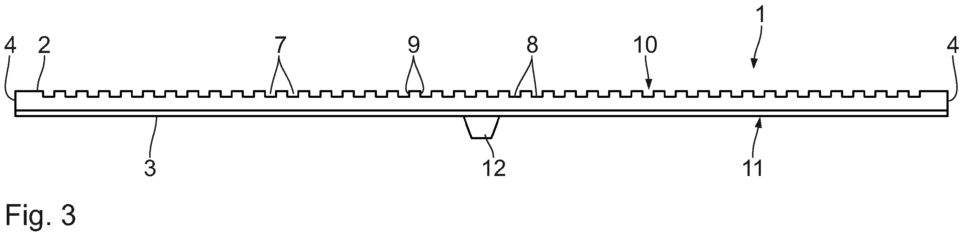

- Fig. 3: einen Schnitt durch das in den Fig. 1 und 2 gezeigte Gieß-Band,
- Fig. 4: eine Detail-Ansicht der in Fig. 1b dargestellten Gieß-Anlage, und
- Fig. 5: eine vereinfachte Ansicht, die eine Gieß-Anlage gemäß einer alternativen Ausführungsform und eine dieser vorgeordnete Misch- und Dosier-Vorrichtung veranschaulicht.

Zunächst wird das Gieß-Band 1 näher beschrieben. Das Gieß-Band 1 hat eine nach außen gewandte Oberfläche 2 und eine dieser gegenüber liegende, innere Oberfläche 3. Die äußere Oberfläche 2 ist im Wesentlichen eben ausgeführt. Auch die innere Oberfläche 3 ist im Wesentlichen eben.

Das Gieß-Band 1 hat außerdem zwei einander gegenüberliegende Längs-Ränder 4, die parallel zueinander verlaufen. Die Längs-Ränder 4 erstrecken sich in einer Längs-Richtung 5 des Gieß-Bands 1 entlang desselben. Die Längs-Ränder 4 sind in einer zu der Längs-Richtung 5 senkrecht verlaufenden Breiten-Richtung 6 des Gieß-Bands 1 beabstandet zueinander angeordnet.

Das Gieß-Band 1 ist in der Längs-Richtung 5 geschlossen, das heißt es ist endlos ausgeführt. Die Längs-Richtung 5 kann daher bei dieser geschlossenen Ausführungsform auch als Umfangs-Richtung 5 bezeichnet werden. Das Gieß-Band 1 ist flexibel. Insbesondere ist es in der Längs-Richtung 5 biegsam.

Das Gieß-Band 1 umfasst eine Formgebungs-Lage 10 aus einem Silikon-Material, die genauer betrachtet außen die nach außen gewandte Oberfläche 2 hat.

Ferner hat das Gieß-Band 1 eine Lauf-Lage 11, die mit der Formgebungs-Lage 10 fest verbunden ist und aus einem Textil-/Kunststoff-Gewebe gebildet ist. Die Lauf-Lage 11 weist genauer betrachtet innen die innere Oberfläche 3 auf. Die Formgebungs-Lage 10 ist außen, während die Lauf-Lage 11 innen ist.

An der der Formgebungs-Lage 10 abgewandten Seite der Lauf-Lage 11 ist eine gezahnte Führungs-Keilleiste 12 angeordnet, die vorzugsweise aus einem starren PVC-Material gebildet ist. Das Gieß-Band 1 ist über die Führungs-Keilleiste 12 motorisch antreibbar, die somit ein Antriebs-Element bildet. Es ist in der Längs-Richtung 5 antreibbar.

Das Gieß-Band 1 hat eine Vielzahl von Vertiefungen 7, die nutartig bzw. rillenartig ausgeführt sind. Die Vertiefungen 7 gehen von der äußeren Oberfläche 2 aus und sind so bei der Oberfläche 2 nach außen offen. Sie sind in der Formgebungs-Lage 10 angeordnet. Die Vertiefungen 7 erstrecken sich jeweils in der Längs-Richtung 5 und laufen parallel zueinander. Die Vertiefungen 7 haben jeweils einen konstanten, rechteckigen Querschnitt.

Die Vertiefungen 7 sind umlaufend bzw. endlos in der Längs-Richtung 5. Sie sind durch die Formgebungs-Lage 10 begrenzt. Jede Vertiefung 7 hat einen inneren Boden 8, von dem zwei einander gegenüberliegende Seiten-Flanken 9 nach außen vorspringen. Vorzugsweise verlaufen die Seiten-Flanken 9 senkrecht zu dem zugeordneten Boden 8, so dass sich ein eine Vertiefung 7 mit rechteckigem Querschnitt ergibt. Die Seiten-Flanken 9 verlaufen dann parallel zueinander. Sie können auch alternativ von dem zugeordneten Boden 8 schräg nach außen verlaufen. Die Böden 8 begrenzen die Vertiefungen 7 nach innen, während die Seiten-Flanken 9 die Vertiefungen 7 seitlich begrenzen.

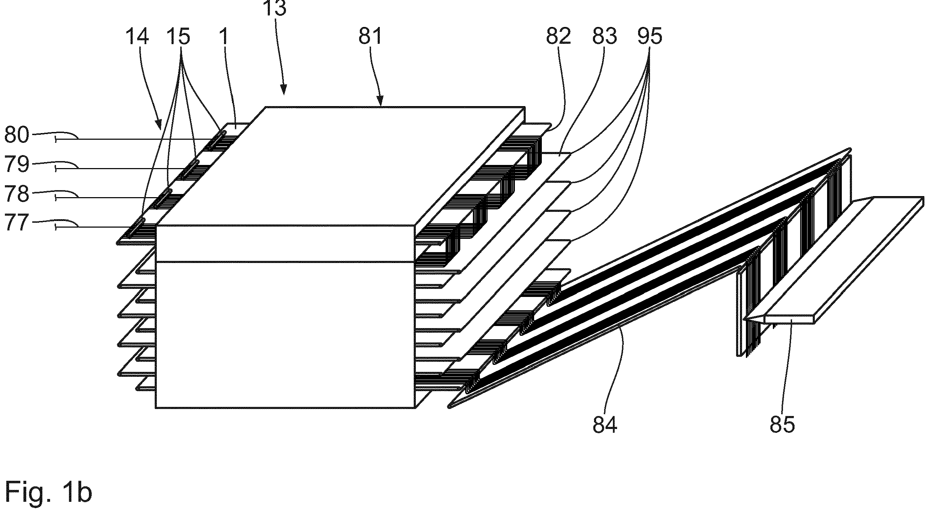

Nachfolgend wird eine Gieß-Anlage 13 unter Bezugnahme auf Fig. 1b näher erläutert. Die Gieß-Anlage 13 umfasst zum einen das Gieß-Band 1 und zum anderen eine Gieß-Fülleinrichtung 14. Die Gieß-Fülleinrichtung 14 weist vorzugsweise vier Gieß-Fülleinheiten 15 auf, die jeweils rohrartig ausgeführt sind und sich in der Breiten-Richtung 6 benachbart oberhalb des Gieß-Bands 1 erstrecken. Jede Gieß-Fülleinheit 15 hat mehrere düsenartige Einfüll-Körper (nicht dargestellt), die oberhalb der Vertiefungen 7 angeordnet und nach diesen ausgerichtet sind. Jeder Vertiefung 7 ist ein Einfüll-Körper zugeordnet.

Es ist ferner mindestens ein Elektro-Antrieb (nicht dargestellt) zum Antrieb des Gieß-Bands 1 in der Längs-Richtung 5 vorgesehen.

Über die Einfüll-Körper ist die gießfähige, bevorratete Fruchtgummi-Masse von oben in die Vertiefungen 7 gezielt eingießbar. Die Vertiefungen 7 werden bei dem Gieß-Vorgang bis knapp zu der äußeren Oberfläche 2 mit der Fruchtgummi-Masse befüllt. Die Fruchtgummi-Masse tritt dabei nicht oben aus den Vertiefungen 7 aus.

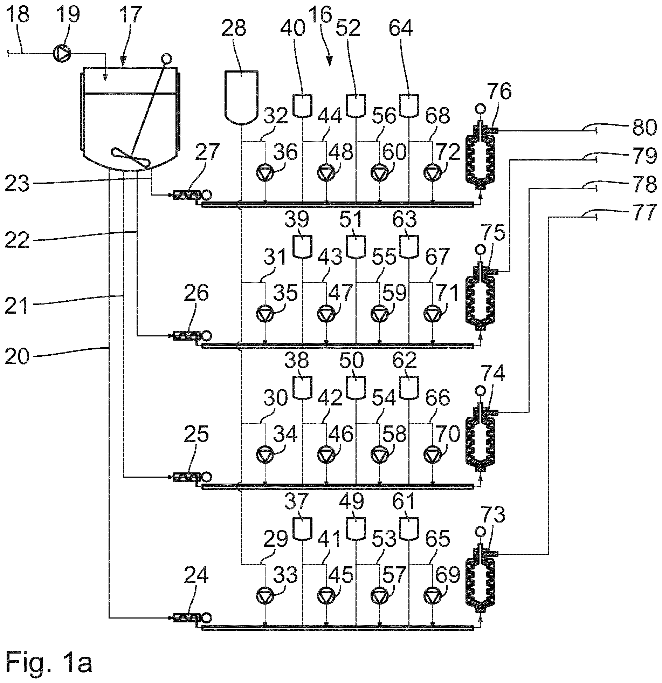

Nachfolgend wird insbesondere unter Bezugnahme auf Fig. 1a, b das prinzipielle Verfahren zur Herstellung der Fruchtgummi-Artikel näher beschrieben.

Die Fruchtgummi-Masse wird in einer entsprechenden Misch- und Dosier-Vorrichtung 16 in bekannter Weise hergestellt. Die Misch- und Dosier-Vorrichtung 16 umfasst mindestens einen Vorrats-Behälter 17, in dem eine Basismasse oder Grundmasse, vorzugsweise aus Glukosesirup, Zucker, Gelatine, Pektin und/oder anderen Geliermitteln bevorratet ist. Die Basismasse ist in einer Förder-Leitung 18 über eine Förder-Pumpe 19 zu dem Vorrats-Behälter 17 förderbar.

Von dem Vorrats-Behälter 17 gehen unten mehrere Dosier-Leitungen 20, 21, 22, 23 aus. In jeder Dosier-Leitung 20, 21, 22, 23 ist eine Förder-Pumpe 24, 25, 26 bzw. 27 zur Förderung der Basismasse angeordnet.

Den Dosier-Leitungen 20, 21, 22, 23 ist ein Säuremittel-Vorrats-Behälter 28 zugeordnet. Der Säuremittel-Vorrats-Behälter 28 steht über Säuremittel-Zuführleitungen 29, 30, 31, 32 mit der jeweiligen Dosier-Leitung 20, 21, 22 bzw. 23 in Strömungs-Verbindung. In jeder Säuremittel-Zuführleitung 29, 30, 31, 32 ist eine Dosier-Pumpe 33, 34, 35 bzw. 36 zur dosierten Förderung des in dem Säuremittel-Vorrats-Behälter 28 bevorraten Säuremittels zu den Dosier-Leitungen 20, 21, 22 bzw. 23 angeordnet.

Jeder Dosier-Leitung 20, 21, 22, 23 ist ein Farbstoff-Vorrats-Behälter 37, 38, 39 bzw. 40 zugeordnet. Jeder Farbstoff-Vorrats-Behälter 37, 38, 39, 40 steht über eine Farbstoff-Zuführleitung 41, 42, 43 bzw. 44 mit der Dosier-Leitung 20, 21, 22 bzw. 23 in Strömungs-Verbindung. In jeder Farbstoff-Zuführleitung 41, 42, 43, 44 ist eine Dosier-Pumpe 45, 46, 47 bzw. 48 zur dosierten Förderung des in den Farbstoff-Vorrats-Behältern 37, 38, 39 bzw. 40 bevorrateten Farbstoffs zu den Dosier-Leitungen 20, 21, 22 bzw. 23 angeordnet. Die in den verschiedenen Farbstoff-Vorrats-Behältern 37, 38, 39 bzw. 40 bevorrateten Farbstoffe unterscheiden sich vorzugsweise in ihrer Farbe.

Ferner ist jeder Dosier-Leitung 20, 21, 22, 23 ein Aroma-Vorrats-Behälter 49, 50, 51 bzw. 52 zugeordnet. Jeder Aroma-Vorrats-Behälter 49, 50, 51, 52 steht über eine Aroma-Zuführleitung 53, 54, 55 bzw. 56 mit der Dosier-Leitung 20, 21, 22 bzw. 23 in Strömungs-Verbindung. In jeder Aroma-Zuführleitung 53, 54, 55, 56 ist eine Dosier-Pumpe 57, 58, 59 bzw. 60 zur dosierten Förderung des in den Aroma-Vorrats-Behältern 49, 50, 51 bzw. 52 bevorrateten Aromas zu den Dosier-Leitungen 20, 21, 22 bzw. 23 angeordnet. Die in den verschiedenen Aroma-Vorrats-Behältern 49, 50, 51 bzw. 52 bevorrateten Aromen unterscheiden sich vorzugsweise in ihrem Aroma.

Jeder Dosier-Leitung 20, 21, 22, 23 ist ein weiterer Vorrats-Behälter 61, 62, 63 bzw. 64 zugeordnet. Jeder weiterer Vorrats-Behälter 61, 62, 63, 64 steht über eine weitere Zuführleitung 65, 66, 67, 68 mit der Dosier-Leitung 20, 21, 22 bzw. 23 in Strömungs-Verbindung. In jeder weiteren Zuführleitung 65, 66, 67, 68 ist eine weitere Dosier-Pumpe 69, 70, 71 bzw. 72 zur dosierten Förderung des in den weiteren Vorrats-Behältern 61, 62, 63, 64 bevorrateten Stoffs zu den Dosier-Leitungen 20, 21, 22 bzw. 23 angeordnet. Die in den verschiedenen, weiteren Vorrats-Behältern 61, 62, 63, 64 bevorrateten Stoffe unterscheiden sich vorzugsweise in ihrer Zusammensetzung.

In jeder Dosier-Leitung 20, 21, 22, 23 ist nach den jeweiligen Zuführleitungen jeweils ein dynamischer Mischer 73, 74, 75 bzw. 76 angeordnet. Die dynamischen Mischer 73, 74, 75, 76 stehen über VerbindungsLeitungen 77, 78, 79 bzw. 80 mit den Gieß-Fülleinheiten 15 in Strömungs-Verbindung.

Stromabwärts zu der Misch- und Dosier-Vorrichtung 16 ist die Gieß-Anlage 13 angeordnet. Der Gieß-Fülleinrichtung 14 ist eine Kühl-/Trocknungs-Vorrichtung nachgeordnet, die als Kühl-/Trocknungs-Kanal 81, 83 ausgebildet ist. Das Gieß-Band 1 läuft oben durch die Kühl-Vorrichtung bzw. den Kühl-Kanal 81, sodass die Fruchtgummi-Masse dort eine erste Kühlung erhält. Es ist dabei um Umlenk-Rollen (nicht dargestellt) geführt und endlos ausgebildet. Das Gieß-Band 1 steht über die Führungs-Keilleiste 12 mit einem entsprechenden Antrieb in AntriebsVerbindung und wird von diesem im Betrieb in der Umfangs-Richtung 5 umlaufend motorisch angetrieben.

Stromabwärts zu dem Gieß-Band 1 ist benachbart zu dem Gieß-Band 1 eine Band-Austragshilfe 82 angeordnet.

In der Trocknungs-Vorrichtung bzw. dem Trocknungs-Kanal 83, die/der der Kühl-Vorrichtung 81 nachgeordnet ist, sind mehrere Transport-Bänder 95 angeordnet, die endlos sind und geringfügig in ihrer Längs-Richtung versetzt zueinander angeordnet sind. Die Transport-Bänder 95 sind in ihrer jeweiligen Umfangs-Richtung jeweils umlaufend, motorisch angetrieben. Sie sind etagenartig unter dem Gieß-Band 1 und untereinander angeordnet. Durch die in der Horizontalen versetzte Anordnung der Transport-Bänder 95 zueinander bildet jeder gegenüber dem vorherigen bzw. stromaufwärtigen Transport-Band 95 überstehende Teil einen Auffang- bzw. Empfangs-Bereich zum Auffangen bzw. Empfangen der Fruchtgummi-Artikel von dem vorherigen bzw. stromaufwärtigen Transport-Band 95. Es ist von Vorteil, wenn die Transport-Bänder 95 jeweils eine identische Länge haben.

Günstigerweise ist nur jedes zweite Transport-Band 95 gegenüber dem vorherigen Transport-Band 95 in der Horizontalen versetzt. Der Versatz ist vorzugsweise in Richtung und Länge jeweils gleich. Die Transport-Bänder 95 haben somit bei der Gieß-Fülleinrichtung 14 erste Umkehr-Stellen, die in zwei verschiedenen, vertikal verlaufenden Ebenen liegen. Die Transport-Bänder 95 haben folglich außerdem zweite Umkehr-Stellen, die gegenüberliegend zu den ersten Umkehr-Stellen angeordnet sind und in zwei verschiedenen, vertikal verlaufenden Enden liegen. Genauer betrachtet ist die Trocknungs-Vorrichtung 83 unter der Kühl-Vorrichtung 81 angeordnet.

In der Kühl-Vorrichtung 81 herrscht eine Temperatur zwischen 2 °C und 8 °C, die regelbar ist. In der Trocknungs-Vorrichtung 83 herrscht eine Temperatur zwischen 21 °C und 27 °C und eine Feuchte zwischen 31 % und 38 %.

Stromabwärts zu der Kühl-/Trocknungs-Vorrichtung 81, 83 ist ein Steigband-Förderband 84 vorgesehen, das von der Trocknungs-Vorrichtung 83 in der Höhe ansteigt.

Stromabwärts zu dem Steigband-Förderband 84 ist eine Querschneide-Einrichtung 85 angeordnet, die von dem Steigband-Förderband 84 endseitig nach unten hängende gekühlte und getrocknete Fruchtgummi-Artikel kürzt. Eine andere Orientierung der Querschneide-Einrichtung 85 ist alternativ möglich.

Nach der Querschneid-Einrichtung 85 ist eine Wiege-Einrichtung (nicht dargestellt) zum Wiegen der gekürzten Fruchtgummi-Artikel und eine Verpackungs-Einrichtung (nicht dargestellt) zum Verpacken der gekürzten Fruchtgummi-Artikel angeordnet.

In der Misch- und Dosier-Vorrichtung 16 wird die zur Herstellung der Fruchtgummi-Artikel benötigte Fruchtgummi-Masse gemischt und dosiert. Dabei wird aus dem Vorrats-Behälter 17 die Basismasse durch die FörderPumpen 24 bis 27 in den Dosier-Leitungen 20 bis 23 dosiert gefördert.

Der in den Dosier-Leitungen 20 bis 23 vorliegenden Basismasse wird dann aus dem Säuremittel-Vorrats-Behälter 28 Säuremittel durch die Dosier-Pumpen 33 bis 36 über die Säuremittel-Zuführleitungen 29 bis 32 dosiert zugegeben.

Anschließend wird den verschiedenen Dosier-Leitungen 20 bis 23 aus dem jeweiligen Farbstoff-Vorrats-Behälter 37 bis 40 Farbstoff zugeführt. Der Farbstoff wird jeweils durch die entsprechende Dosier-Pumpe 45 bis 48 in der jeweiligen Farbstoff-Zuführ-Leitung 41 bis 44 dosiert der entsprechenden Dosier-Leitung 20 bis 23 zugeführt.

Anschließend wird den verschiedenen Dosier-Leitungen 20 bis 23 Aroma aus dem jeweiligen Aroma-Vorrats-Behälter 49 bis 52 zugeführt. Die dosierte Zuführung in die jeweilige Dosier-Leitung 20 bis 23 erfolgt durch die jeweilige Dosier-Pumpe 57 bis 60 in der jeweiligen Aroma-Zuführleitung 53 bis 56.

Anschließend werden der jeweiligen Dosier-Leitung 20 bis 23 diverse weitere Stoffe aus dem weiteren Vorrats-Behälter 61 bis 64 dosiert zugeführt. Dies erfolgt durch die Dosier-Pumpen 69 bis 72 über die Zuführleitungen 65 bis 68.

Die in den jeweiligen Dosier-Leitungen 20 bis 23 vorliegenden Massen werden in den dynamischen Mischern 73 bis 76 vermischt. Die Dosier-Leitungen 20 bis 23 sind zueinander getrennt. Die in den Dosier-Leitungen 20 bis 23 vorliegenden Fruchtgummi-Massen unterscheiden sich vorzugsweise in ihrer Zusammensetzung, sodass dann auch später verschiedene Fruchtgummi-Artikel vorliegen.

Die Fruchtgummi-Massen werden dann in die Gieß-Fülleinheiten 15 gefördert, wo sie dann in die Vertiefungen 7 durch die Gieß-Fülleinrichtung 14 gezielt und dosiert, kontinuierlich eingegossen werden.

Vor der Gieß-Fülleinrichtung 14 ist quer zum Gieß-Band 1 eine Beölungs-Vorrichtung (nicht dargestellt) platziert, die je nach Bedarf und Erfordernis einen hauchdünnen Trennmittel-Trennöl-Film gezielt in die jeweiligen Vertiefungen 7 einbringt, vorzugsweise durch Sprühen.

Die strangartig gegossenen Fruchtgummi-Massen werden dann in der Kühl-Vorrichtung 81 auf dem Gieß-Band 1 gekühlt. Die bereits gekühlten, endlosen Fruchtgummi-Artikel werden nach dem Durchlauf durch die Kühl-Vorrichtung 81 von dem Gieß-Band 1 am Ende desselben nach unten auf das darunter angeordnete Transport-Band 95 in der Trocknungs-Vorrichtung 83 gefördert bzw. überführt, das entsprechend gegenüber dem Gieß-Band 1 in seiner Längs-Richtung vorsteht. Die Fruchtgummi-Artikel werden mehrfach jeweils auf das darunter liegende Transport-Band 95 nach unten gefördert. Die Transport-Bänder 95 sind in mehreren Etagen in der Trocknungs-Vorrichtung 83 versetzt zueinander angeordnet, sodass die Fruchtgummi-Artikel mehrfach die Trocknungs-Vorrichtung 83 auf den Transport-Bändern 95 durchlaufen und entsprechend weiter getrocknet und entfeuchtet werden. Das Gieß-Band 1 und die Transport-Bänder 95 erstrecken sich parallel zueinander. Sie verlaufen jeweils horizontal. Die Fruchtgummi-Artikel laufen also zuerst durch die Kühl-Vorrichtung 81 und dann durch die Trocknungs-Vorrichtung 83. Dabei werden die Fruchtgummi-Artikel von dem Gieß-Band 1 zunächst auf das in Förder-Richtung nachgeordnete, erste Transport-Band 95 überführt, das unterhalb des Gieß-Bands 1 verläuft. Die Fruchtgummi-Artikel werden dann von dem ersten Transport-Band 95 auf weitere, in Förder-Richtung nachgeordnete Transport-Bänder 95 überführt. Die Fruchtgummi-Artikel werden also nach dem Verlassen des jeweiligen Transport-Bands 95 nach unten auf das nächste Transport-Band 95 geführt bzw. gefördert und werden von dessen Auffang- bzw. Empfangs-Bereich aufgefangen bzw. empfangen. Das Gieß-Band 1 läuft durch die Kühl-Vorrichtung 81, während die Transport-Bänder 95 in der Trocknungs-Vorrichtung 83 angeordnet sind.

Danach werden die getrockneten und gekühlten Fruchtgummi-Artikel von dem untersten Transport-Band 95 nach unten auf das Steigband-Förderband 84 gefördert und auf diesen nach schräg oben transportiert.

Am Ende des Steigband-Förderbands 84 hängen die endlosen Fruchtgummi-Artikel vertikal nach unten. Die Fruchtgummi-Artikel werden dort von der Querschneide-Einrichtung 85 in ihrer Länge gekürzt.

Anschließend werden die gekürzten Fruchtgummi-Artikel in vorbestimmten Massen in Verpackungs-Beuteln verpackt. In den Verpackungs-Beuteln erfolgt eine weitere, vollständige Gelierung und Trocknung der Fruchtgummi-Artikel.

Gemäß einer alternativen Ausführungsform ist jeder Dosier-Leitung 20, 21, 22, 23 genau ein Farbstoff-Vorrats-Behälter und/oder genau ein Aroma-Vorrats-Behälter und/oder genau ein weiterer Vorrats-Behälter zugeordnet. Alternativ ist jeder Dosier-Leitung 20, 21, 22, 23 ein Basismasse-Masse-Vorrats-Behälter und/oder ein Säuremittel-Vorrats-Behälter 28 zugeordnet.

Anstelle der beschriebenen und gezeigten Gieß-Fülleinrichtung 14 können auch andere bzw. herkömmliche Gieß-Einrichtungen eingesetzt werden.

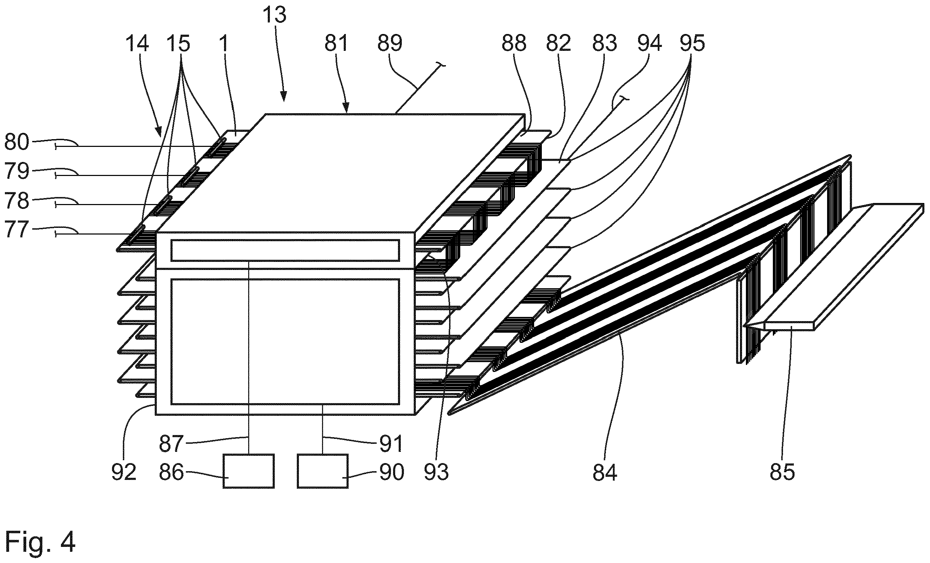

Nachfolgend wird unter Bezugnahme auf Fig. 4 die Kühl-Trocknungs-Vorrichtung detaillierter beschrieben. Ansonsten existieren keine Änderungen. Die Kühl-Trocknungs-Vorrichtung umfasst eine Kühl-Vorrichtung 81 und eine Trocknungs-Vorrichtung 83.

Die Kühl-Vorrichtung 81 wiederum umfasst eine Kühl- bzw. Kälte-Einrichtung 86, die einen Kühl-Luftstrom erzeugt. Die Kühl-Einrichtung 86 ist über mindestens eine Kühl-Luftstrom-Zuführ-Leitung 87 an einen Kühl-Raum 88 der Kühl-Vorrichtung 81 seitlich angeschlossen, durch den das Gieß-Band 1 horizontal läuft. Es ist von Vorteil, wenn die mindestens eine Kühl-Luftstrom-Zuführ-Leitung 87 an mehreren Stellen entlang des Gieß-Bands 1 in den Kühl-Raum 88 mündet. Gegenüberliegend zu dem Anschluss der mindestens einen Kühl-Luftstrom-Zuführ-Leitung 87 an den Kühl-Raum 88 ist an den Kühl-Raum 88 mindestens eine Abführ-Leitung 89 zum Abführen des erwärmten Kühl-Luftstroms angeschlossen.

Der von der Kühl-Einrichtung 86 erzeugte Kühl-Luftstrom wird also über die mindestens eine Kühl-Zuführ-Leitung 87 seitlich in den Kühl-Raum 88 geführt und strömt senkrecht zu der Förder-Richtung bzw. Umlauf-Richtung des Gieß-Bands 1 über dieses bzw. die in die Vertiefungen 7 eingebrachte Fruchtgummi-Masse. Dabei wird die Fruchtgummi-Masse gekühlt. Der erwärmte Kühl-Luftstrom wird dann wieder seitlich aus dem Kühl-Raum 88 über die mindestens eine Abführ-Leitung 89 abgeführt. Es ist von Vorteil, wenn die Kühl-Einrichtung 86 eine Strömungs-Erzeugungs-Einheit (nicht dargestellt) zum Bewegen des Kühl-Luftstroms umfasst.

Die Trocknungs-Vorrichtung 83 umfasst eine Trocknungs-Einrichtung 90, die über mindestens eine Trocknungs-Luftstrom-Zuführ-Leitung 91 seitlich an einen Trocknungs-Raum 92 der Trocknungs-Vorrichtung 83 angeschlossen ist, in dem die Transport-Bänder 95 untergebracht sind. Der Kühl-Raum 88 und der Trocknungs-Raum 92 sind durch eine Trenn-Decke 93 voneinander getrennt.

Es ist von Vorteil, wenn die mindestens eine Trocknungs-Luftstrom-Zuführ-Leitung 91 an mehreren Stellen entlang der Transport-Bänder 95, vorzugsweise entlang von jedem Transport-Band 95, seitlich an den Trocknungs-Raum 92 angeschlossen ist. Gegenüberliegend zu dem Anschluss der mindestens einen Trocknungs-Luftstrom-Zuführ-Leitung 91 ist mindestens eine Abführ-Leitung 94 an den Trocknungs-Raum 92 angeschlossen, um den Trocknungs-Luftstrom wieder aus dem Trocknungs-Raum 92 zu führen. Es ist von Vorteil, wenn die Trocknungs-Einrichtung 90 eine Strömungs-Erzeugungs-Einheit (nicht dargestellt) zum Bewegen des Trocknungs-Luftstroms umfasst.

Der von der Trocknungs-Einrichtung 90 erzeugte Trocknungs-Luftstrom wird über die mindestens eine Trocknungs-Luftstrom-Zuführ-Leitung 81 seitlich in den Trocknungs-Raum 92 geführt und strömt senkrecht zu der Förder- bzw. Umlauf-Richtung der Transport-Bänder 95 über diese und trocknet dabei die auf diesen liegenden Fruchtgummi-Artikel. Der Trocknungs-Luftstrom, der Feuchtigkeit von den Fruchtgummi-Artikeln aufgenommen hat, wird dann seitlich über die mindestens eine Abführ-Leitung 94 aus dem Trocknungs-Raum 92 abgeführt.

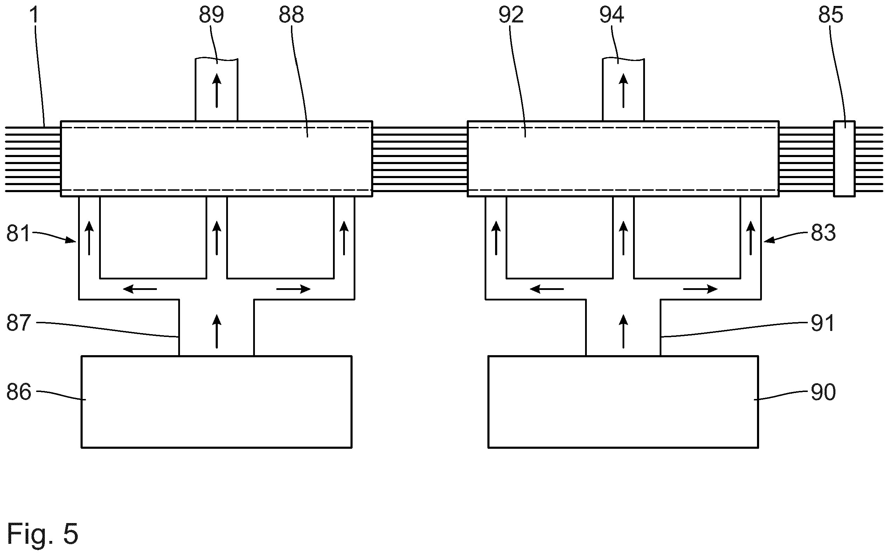

Nachfolgend wird unter Bezugnahme auf Fig. 5 eine weitere Ausführungsform beschrieben. Auf die vorherige Beschreibung wird verwiesen. Im Gegensatz zu der vorherigen Ausführungsform sind die Kühl-Vorrichtung 81 und die Trocknungs-Vorrichtung 83 in der Transport-Richtung des Gieß-Bands 1 nebeneinander und räumlich getrennt zueinander angeordnet. Das Gieß-Band 1 kann sowohl durch den Kühl-Raum 88 als auch durch den Trocknungs-Raum 92 laufen. Alternativ ist in dem Trocknungs-Raum 92 wieder mindestens ein Transport-Band 95 angeordnet, das gekühlte Fruchtgummi-Artikel von dem Gieß-Band 1 erhält. In dem Trocknungs-Raum 92 können die Fruchtgummi-Artikel etagenartig oder nur horizontal gefördert werden.

## Patentansprüche

1. Gieß-Anlage zur Herstellung von Fruchtgummi-Artikeln aus einer Fruchtgummi-Masse,
a) mit mindestens einem Gieß-Band (1)
i) mit einer Längs-Richtung (5),
ii) mit einer Breiten-Richtung (6), die sich senkrecht zu der Längs-Richtung (5) erstreckt, und
iii) mit mindestens einem Formgebungs-Bereich (10), der
- eine erste Oberfläche (2) aufweist, und
- mindestens eine von der ersten Oberfläche (2) ausgehende Vertiefung (7) zum Eingießen der gießfähigen Fruchtgummi-Masse aufweist, wobei die Fruchtgummi-Masse mindestens ein Geliermittel enthält, das zu einer Gelierung führt und einen geleeartigen Fruchtgummi-Artikel bildet, und
b) mit mindestens einer Gieß-Fülleinrichtung (14) zum Gießen der gießfähigen Fruchtgummi-Masse in die mindestens eine Vertiefung (7), und
c) mit einer der mindestens einen Gieß-Fülleinrichtung (14) nachgeordneten Kühl-Trocknungs-Vorrichtung,
i) wobei die Kühl-Trocknungs-Vorrichtung eine Kühl-Vorrichtung (81) umfasst, sodass die Fruchtgummi-Masse dort eine Kühlung erhält,
ii) wobei das mindestens eine Gieß-Band (1) durch die Kühl-Vorrichtung (81) zum Kühlen der Fruchtgummi-Masse auf dem Gieß-Band (1) läuft,
iii) wobei die Kühl-Trocknungs-Vorrichtung eine der Kühl-Vorrichtung (81) nachgeordnete Trocknungs-Vorrichtung (83) zum Trocknen der Fruchtgummi-Artikel umfasst, und
**dadurch gekennzeichnet, dass**
d) der mindestens einen Gieß-Fülleinrichtung (14) eine Trennmittel-Vorrichtung zum Benetzen zumindest einer die mindestens eine Vertiefung (7) begrenzenden Wand mit einem Trennmittel vorgeordnet ist,
e) die Kühl-Vorrichtung (81) ausgebildet ist, eine Temperatur zwischen 2 °C und 8 °C zu erzeugen, wobei die Temperatur regelbar ist, und
f) die Trocknungs-Vorrichtung (83) ausgebildet ist, eine Temperatur zwischen 21 °C und 27 °C und eine Feuchte zwischen 31 % und 38 % zu erzeugen.

2. Gieß-Anlage nach Anspruch 1, **dadurch gekennzeichnet, dass** die Kühl-Vorrichtung (81) oberhalb der Trocknungs-Vorrichtung (83) angeordnet ist.

3. Gieß-Anlage nach einem der vorherigen Ansprüche, **dadurch gekennzeichnet, dass** in der Trocknungs-Vorrichtung (83) mindestens ein Transport-Band (95) zum weiteren Abkühlen und/oder Trocknen der Fruchtgummi-Artikel angeordnet ist, wobei das mindestens eine Transport-Band (95) stromabwärts zu dem mindestens einen Gieß-Band (1) angeordnet ist.

4. Gieß-Anlage nach Anspruch 3, **dadurch gekennzeichnet, dass** mehrere der Transport-Bänder (95) in der Trocknungs-Vorrichtung (83) vorhanden sind, die etagenartig unter dem mindestens einen Gieß-Band (1) und untereinander angeordnet sind, wobei vorzugsweise die Transport-Bänder (95) zum Überführen der Fruchtgummi-Artikel geringfügig in ihrer Längs-Richtung versetzt zueinander angeordnet sind.

5. Gieß-Anlage nach einem der vorherigen Ansprüche, **dadurch gekennzeichnet, dass** die mindestens eine Gieß-Fülleinrichtung (14) mindestens einen, vorzugsweise düsenartigen, Einfüll-Körper zum Einbringen der gießfähigen Fruchtgummi-Masse in die mindestens eine Vertiefung (7) aufweist.

6. Gieß-Anlage nach einem der vorherigen Ansprüche, **dadurch gekennzeichnet, dass** der mindestens eine Formgebungs-Bereich (10) aus einem Silikon-Material gebildet ist.

7. Gieß-Anlage nach einem der vorherigen Ansprüche, **dadurch gekennzeichnet, dass** der mindestens eine Formgebungs-Bereich (10) als flächige Formgebungs-Lage ausgeführt ist.

8. Gieß-Anlage nach einem der vorherigen Ansprüche, **gekennzeichnet durch** mindestens einen Lauf-Bereich (11), der mit dem mindestens einen Formgebungs-Bereich (10) in fester Verbindung steht und vorzugsweise aus einem Gewebe-Material gebildet ist, wobei vorzugsweise der mindestens eine Lauf-Bereich (11) als flächige Lauf-Lage ausgeführt ist.

9. Gieß-Anlage nach Anspruch 8, **dadurch gekennzeichnet, dass** an dem mindestens einen Lauf-Bereich (11) mindestens ein Antriebs-Element (12) zum Antreiben des Gieß-Bandes (1) angeordnet ist, wobei vorzugsweise das mindestens eine Antriebs-Element (12) leistenartig ausgeführt ist.

10. Gieß-Anlage nach einem der vorherigen Ansprüche, **dadurch gekennzeichnet, dass** sich die mindestens eine Vertiefung (7) in der Längs-Richtung (5) erstreckt und vorzugsweise in der Längs-Richtung (5) endlos ist.

11. Gieß-Anlage nach einem der vorherigen Ansprüche, **dadurch gekennzeichnet, dass** das mindestens eine Gieß-Band (1) flexibel und endlos ist.

12. Verfahren zur Herstellung von Fruchtgummi-Artikeln aus einer Fruchtgummi-Masse, umfassend die Schritte
- Bereitstellen von mindestens einem Gieß-Band (1)
-- mit einer Längs-Richtung (5),
-- mit einer Breiten-Richtung (6), die sich senkrecht zu der Längs-Richtung (5) erstreckt, und
-- mit mindestens einem Formgebungs-Bereich (10), der
--- eine erste Oberfläche (2) aufweist, und
--- mindestens eine von der ersten Oberfläche (2) ausgehende Vertiefung (7) zum Eingießen der gießfähigen Fruchtgummi-Masse aufweist, und
- Gießen der gießfähigen Fruchtgummi-Masse in die mindestens eine Vertiefung (7) mittels mindestens einer Gieß-Fülleinrichtung (14), wobei die Fruchtgummi-Masse mindestens ein Geliermittel enthält, das zu einer Gelierung führt und einen geleeartigen Fruchtgummi-Artikel bildet,
- wobei der mindestens einen Gieß-Fülleinrichtung (14) eine Kühl-Trocknungs-Vorrichtung nachgeordnet ist,
-- wobei die Kühl-Trocknungs-Vorrichtung eine Kühl-Vorrichtung (81) umfasst, sodass die Fruchtgummi-Masse dort eine Kühlung erhält, wobei in der Kühl-Vorrichtung (81) eine Temperatur zwischen 2 °C und 8 °C herrscht, die regelbar ist,
-- wobei das mindestens eine Gieß-Band (1) durch die Kühl-Vorrichtung (81) zum Kühlen der Fruchtgummi-Masse auf dem Gieß-Band (1) läuft,
-- wobei die Kühl-Trocknungs-Vorrichtung eine der Kühl-Vorrichtung (81) nachgeordnete Trocknungs-Vorrichtung (83) zum Trocknen der Fruchtgummi-Artikel umfasst, wobei in der Trocknungs-Vorrichtung (83) eine Temperatur zwischen 21 °C und 27 °C und eine Feuchte zwischen 31 % und 38 % herrscht,
- wobei zumindest eine die mindestens eine Vertiefung (7) begrenzende Wand mit einem Trennmittel vor dem Eingießen der gießfähigen Fruchtgummi-Masse benetzt wird.

13. Verfahren nach Anspruch 12, **dadurch gekennzeichnet, dass** eine weitere Abkühlung und/oder Trocknung der Fruchtgummi-Artikel auf mindestens einem Transport-Band (95) erfolgt, das stromabwärts zu dem mindestens einen Gieß-Band (1) angeordnet ist.

14. Verfahren nach Anspruch 12 oder 13, **dadurch gekennzeichnet, dass** die in die mindestens eine Vertiefung (7) eingebrachte Fruchtgummi-Masse durch einen Kühl-Gasstrom gekühlt und durch einen trockenen Gasstrom getrocknet wird.

## Claims

1. Casting installation for producing fruit gum articles from a fruit gum mass,
a) having at least one casting belt (1)
i) having a longitudinal direction (5),
ii) having a width direction (6) which extends perpendicular to the longitudinal direction (5), and
iii) having at least one shaping region (10) which
- has a first surface (2), and
- at least one depression (7) which emanates from the first surface (2) and is intended for pouring in the castable fruit gum mass, wherein the fruit gum mass contains at least one gelling agent which leads to gelation and forms a jelly-like fruit gum article, and
b) having at least one pouring/filling device (14) for pouring the castable fruit gum mass into the at least one depression (7), and
c) having a cooling/drying device arranged downstream of the at least one pouring/filling device (14),
i) wherein the cooling/drying device comprises a cooling device (81) such that the fruit gum mass is provided with cooling there,
ii) wherein the at least one casting belt (1) runs through the cooling device (81) in order to cool the fruit gum mass on the casting belt (1),
iii) wherein the cooling/drying device comprises a drying device (83) which is arranged downstream of the cooling device (81) and intended for drying the fruit gum articles, and
**characterized in that**
d) the at least one pouring/filling device (14) has arranged upstream thereof a release agent device for wetting at least one wall delimiting the at least one depression (7) with a release agent,
e) the cooling device (81) is designed to generate a temperature of between 2°C and 8°C, with the temperature being controllable, and
f) the drying device (83) is designed to generate a temperature of between 21°C and 27°C and a moisture of between 31% and 38%.

2. Casting installation according to Claim 1, **characterized in that** the cooling device (81) is arranged above the drying device (83).

3. Casting installation according to either of the preceding claims, **characterized in that** at least one conveyor belt (95) for further cooling and/or drying of the fruit gum articles is arranged in the drying device (83), wherein the at least one conveyor belt (95) is arranged downstream of the at least one casting belt (1).

4. Casting installation according to Claim 3, **characterized in that** a plurality of the conveyor belts (95) are present in the drying device (83) and are arranged in the manner of tiers below the at least one casting belt (1) and below one another, wherein, for transfer of the fruit gum articles, the conveyor belts (95) are preferably arranged so as to be slightly offset from one another in their longitudinal direction.

5. Casting installation according to one of the preceding claims, **characterized in that** the at least one pouring/filling device (14) has at least one, preferably nozzle-like, filling body for introducing the castable fruit gum mass into the at least one depression (7).

6. Casting installation according to one of the preceding claims, **characterized in that** the at least one shaping region (10) is formed from a silicone material.

7. Casting installation according to one of the preceding claims, **characterized in that** the at least one shaping region (10) is configured as a flat shaping layer.

8. Casting installation according to one of the preceding claims, **characterized by** at least one running region (11) which is fixedly connected to the at least one shaping region (10) and is preferably formed from a woven fabric material, wherein the at least one running region (11) is preferably configured as a flat running layer.

9. Casting installation according to Claim 8, **characterized in that** at least one driving element (12) for driving the casting belt (1) is arranged on the at least one running region (11), wherein the at least one driving element (12) is preferably of strip-like configuration.

10. Casting installation according to one of the preceding claims, **characterized in that** the at least one depression (7) extends in the longitudinal direction (5) and is preferably endless in the longitudinal direction (5).

11. Casting installation according to one of the preceding claims, **characterized in that** the at least one casting belt (1) is flexible and endless.

12. Method for producing fruit gum articles from a fruit gum mass, comprising the following steps:
- providing at least one casting belt (1)
-- having a longitudinal direction (5),
-- having a width direction (6) which extends perpendicular to the longitudinal direction (5), and
-- having at least one shaping region (10) which
--- has a first surface (2), and
--- at least one depression (7) which emanates from the first surface (2) and is intended for pouring in the castable fruit gum mass, and
- pouring the castable fruit gum mass into the at least one depression (7) by means of at least one pouring/filling device (14), wherein the fruit gum mass contains at least one gelling agent which leads to gelation and forms a jelly-like fruit gum article,
- wherein a cooling/drying device is arranged downstream of the at least one pouring/filling device (14),
-- wherein the cooling/drying device comprises a cooling device (81) such that the fruit gum mass is provided with cooling there, wherein a temperature between 2°C and 8°C prevails in the cooling device (81), said temperature being controllable,
-- wherein the at least one casting belt (1) runs through the cooling device (81) in order to cool the fruit gum mass on the casting belt (1),
-- wherein the cooling/drying device comprises a drying device (83) which is arranged downstream of the cooling device (81) and intended for drying the fruit gum articles, wherein a temperature between 21°C and 27°C and a moisture between 31% and 38% prevails in the drying device (83),
- wherein at least one wall delimiting the at least one depression (7) is wetted with a release agent prior to the castable fruit gum mass being poured in.

13. Method according to Claim 12, **characterized in that** a further cooling and/or drying of the fruit gum articles takes place on at least one conveyor belt (95) which is arranged downstream of the at least one casting belt (1).

14. Method according to Claim 12 or 13, **characterized in that** the fruit gum mass introduced into the at least one depression (7) is cooled by a cooling gas flow and dried by a dry gas flow.

## Revendications

1. Installation de coulée pour la fabrication d'articles en gomme fruitée à partir d'une masse de gomme fruitée,
a) avec au moins une bande de coulée (1),
i) avec une direction longitudinale (5),
ii) avec une direction de largeur (6), qui s'étend perpendiculairement à la direction longitudinale (5), et
iii) avec au moins une zone de façonnage (10), qui
- présente une première surface (2), et
- présente au moins un évidement (7) partant de la première surface (2) pour la coulée de la masse de gomme fruitée coulante, dans laquelle la masse de gomme fruitée contient au moins un gélifiant, qui entraîne une gélification et forme un article en gomme fruitée du type gelée, et
b) avec au moins un dispositif de versement de coulée (14) pour la coulée de la masse de gomme fruitée coulante dans l'au moins un évidement (7), et
c) avec un dispositif de séchage par refroidissement situé en aval de l'au moins un dispositif de versement de coulée (14),
i) dans laquelle le dispositif de séchage par refroidissement comprend un dispositif de refroidissement (81), de sorte que la masse de gomme fruitée y reçoit un refroidissement,
ii) dans laquelle l'au moins une bande de coulée (1) circule à travers le dispositif de refroidissement (81) pour le refroidissement de la masse de gomme fruitée sur la bande de coulée (1),
iii) dans laquelle le dispositif de séchage par refroidissement comprend un dispositif de séchage (83) situé en aval du dispositif de refroidissement (81) pour le séchage des articles en gomme fruitée, et
**caractérisé en ce que**
d) un dispositif à démoulant destiné à humidifier au moins une paroi délimitant l'au moins un évidement (7) avec un démoulant est situé en amont de l'au moins un dispositif de versement de coulée (14),
e) le dispositif de refroidissement (81) est réalisé pour produire une température comprise entre 2°C et 8°C, dans laquelle la température peut être régulée, et
f) le dispositif de séchage (83) est réalisé pour produire une température comprise entre 21 °C et 27 °C et une humidité comprise entre 31 % et 38 %.

2. Installation de coulée selon la revendication 1, **caractérisée en ce que** le dispositif de refroidissement (81) est disposé au-dessus du dispositif de séchage (83).

3. Installation de coulée selon l'une quelconque des revendications précédentes, **caractérisée en ce qu'**au moins une bande de transport (95) pour le refroidissement et/ou séchage supplémentaires des articles en gomme fruitée est disposée dans le dispositif de séchage (83), dans laquelle l'au moins une bande de transport (95) est disposée en aval de l'au moins une bande coulée (1).

4. Installation de coulée selon la revendication 3, **caractérisée en ce que** plusieurs des bandes de transport (95) sont présentes dans le dispositif de séchage (83), qui sont disposées en étages sous l'au moins une bande de coulée (1) et les unes au-dessous des autres, dans laquelle de préférence les bandes de transport (95) destinées au transfert des articles en gomme fruitée sont disposées de manière légèrement décalée les unes des autres dans leur direction longitudinale.

5. Installation de coulée selon l'une quelconque des revendications précédentes, **caractérisée en ce que** l'au moins un dispositif de versement de coulée (14) présente au moins un corps de versement, de préférence du type buse, destiné à introduire la masse de gomme fruitée coulante dans l'au moins un évidement (7).

6. Installation de coulée selon l'une quelconque des revendications précédentes, **caractérisée en ce que** l'au moins une zone de façonnage (10) est formée à partir d'un matériau de silicone.

7. Installation de coulée selon l'une quelconque des revendications précédentes, **caractérisée en ce que** l'au moins une zone de façonnage (10) est réalisée sous la forme d'une couche plane de façonnage.

8. Installation de coulée selon l'une quelconque des revendications précédentes, **caractérisée par** au moins une zone de circulation (11), qui est reliée fixement à l'au moins une zone de façonnage (10) et est formée de préférence à partir d'un matériau en tissu, dans laquelle de préférence l'au moins une zone de circulation (11) est réalisée sous la forme d'une couche de circulation plane.

9. Installation de coulée selon la revendication 8, **caractérisée en ce qu'**au moins un élément d'entraînement (12) destiné à entraîner la bande de coulée (1) est disposé sur l'au moins une zone de circulation (11), dans laquelle de préférence l'au moins un élément d'entraînement (12) est réalisé à la façon d'une baguette.

10. Installation de coulée selon l'une quelconque des revendications précédentes, **caractérisée en ce que** l'au moins un évidement (7) s'étend dans la direction longitudinale (5) et est de préférence sans fin dans la direction longitudinale (5).

11. Installation de coulée selon l'une quelconque des revendications précédentes, **caractérisée en ce que** l'au moins une bande de coulée (1) est flexible et sans fin.

12. Procédé de fabrication d'articles en gomme fruitée à partir d'une masse de gomme fruitée, comprenant les étapes :
- de fourniture d'au moins une bande de coulée (1),
- avec une direction longitudinale (5),
- avec une direction de largeur (6), qui s'étend perpendiculairement à la direction longitudinale (5), et
- avec au moins une zone de façonnage (10), qui
- présente une première surface (2), et
- présente au moins un évidement (7) partant de la première surface (2) pour la coulée de la masse de gomme fruitée coulante, et
- de coulée de la masse de gomme fruitée coulante dans l'au moins un évidement (7) au moyen d'au moins un dispositif de versement de coulée (14), dans lequel la masse de gomme fruitée contient au moins un gélifiant, qui entraîne une gélification et forme un article en gomme fruitée du type gelée,
- dans lequel un dispositif de séchage par refroidissement est situé en aval de l'au moins un dispositif de versement de coulée (14),
- dans lequel le dispositif de séchage par refroidissement comprend un dispositif de refroidissement (81), de sorte que la masse de gomme fruitée y reçoit un refroidissement, dans lequel une température comprise entre 2 °C et 8 °C, qui peut être régulée, règne dans le dispositif de refroidissement (81),
- dans laquelle l'au moins une bande de coulée (1) circule à travers le dispositif de refroidissement (81) pour le refroidissement de la masse de gomme fruitée sur la bande de coulée (1),
- dans laquelle le dispositif de séchage par refroidissement comprend un dispositif de séchage (83) situé en aval du dispositif de refroidissement (81) pour le séchage des articles en gomme fruitée, dans laquelle une température comprise entre 21 °C et 27 °C et une humidité comprise entre 31 % et 38 % règnent dans le dispositif de séchage (83),
- dans lequel au moins une paroi délimitant l'au moins un évidement (7) est humidifiée avec un démoulant avant la coulée de la masse de gomme fruitée coulante.

13. Procédé selon la revendication 12, **caractérisé en ce qu'**un autre refroidissement et/ou séchage des articles en gomme fruitée s'effectue sur au moins une bande de transport (95), qui est disposée en aval de l'au moins une bande de coulée (1).

14. Procédé selon la revendication 12 ou 13, **caractérisé en ce que** la masse de gomme fruitée introduite dans l'au moins un évidement (7) est refroidie par un courant de gaz de refroidissement et séchée par un courant de gaz sec.
